# EUROPÄISCHE PATENTANMELDUNG

(11) **EP 2 520 520 A1**
(43) Veröffentlichungstag der Anmeldung: **07.11.2012**
(21) Anmeldenummer: 12165929.6
(22) Anmeldetag: 27.04.2012
(51) Int. Cl.: B65G 21/20

(54) **Vorrichtung zum positionsgenauen Transport von flächigen Werkstücken**

(30) Priorität: 02.05.2011 DE 102011100210
(71) Anmelder: Robert Bürkle GmbH, 72250 Freudenstadt (DE)
(72) Erfinder: Koch, Thorsten, 32120 Hiddenhausen (DE); Sprint, Hubert, 32108 Bad Salzuflen (DE)
(74) Vertreter: Lemcke, Brommer & Partner

(57) **Zusammenfassung**

Die Erfindung betrifft eine Vorrichtung zum positionsgenauen Transport von flächigen Werkstücken, insbesondere von Werkstoffplatten mit geringer Dichte, wie Dämmstoffplatten und dergleichen, mit mindestens einem um ein Gehäuse (1) umlaufenden Förderband (9), sowie mit einer zumindest teilweise im Gehäuse (1) angeordneten oder durch das Gehäuse wirkenden Vakuumeinrichtung (5), die die Werkstücke ansaugt und hierdurch gegen eine vom Gehäuse (1) abgewandte Transportseite (13) des Förderbands (9) drückt, um sie dort positionsgenau festzuhalten. Das Förderband (9) weist eine Anzahl von Durchgangsbohrungen (14) auf, die entlang seiner Bewegungsrichtung im wesentlichen in einer Reihe angeordnet sind und das Förderband (9) durchgreifen. Das Gehäuse (1) weist einen längs verlaufenden, mit den Durchgangsbohrungen (14) des Förderbandes (9) fluchtenden Ansaugschlitz (10) auf. Das Gehäuse (1) und/oder das Förderband (9) sind mit beidseits des Ansaugschlitzes (10) und/oder beidseits der Reihe von Durchgangsbohrungen (14) angeordneten Dichtflächen (11) versehen, um bei auf dem Gehäuse (1) aufliegendem Förderband (9) einen einerseits an den Ansaugschlitz (10) und andererseits an die Durchgangsbohrungen (14) grenzenden Zwischenraum zwischen dem Gehäuse (1) und dem Förderband (9) abzudichten. Die Durchgangsbohrungen (14) des Förderbandes (9) sind von der Vakuumeinrichtung (5) über den Ansaugschlitz (10) mit Unterdruck beaufschlagbar, um die Werkstücke mit Unterdruck gegen die Transportseite (13) des Förderbandes (9) zu drücken.

## Beschreibung

Die Erfindung betrifft eine Vorrichtung zum positionsgenauen Transport von flächigen Werkstücken nach dem Oberbegriff des Anspruchs 1. Eine solche Vorrichtung umfasst demnach mindestens ein um ein Gehäuse umlaufendes Förderband, das über das Gehäuse gleitend bewegbar ist. Um einen schlupffreien bzw. positionsgenauen Transport des Werkstücks auf dem Förderband sicherzustellen, wird das Werkstück mittels einer Vakuumeinrichtung, die zumindest teilweise im Gehäuse angeordnet ist oder durch das Gehäuse wirkt, angesaugt und hierdurch gegen eine Transportseite des Förderbandes gedrückt. Bei aufliegendem Transport wird die Normalkraft, die das aufliegende Werkstück auf die Transportseite des Förderbands ausübt, hierdurch erhöht, so dass die Reibungskraft entsprechend erhöht wird und im Ergebnis den positionsgenauen Transport sicherstellt. Ein hängender Transport dagegen wird durch das Ansaugen des Werkstücks überhaupt erst ermöglicht.

Beim aufliegenden Transport ist ein Erhöhen der Normalkraft durch Ansaugen der Werkstücke besonders wichtig, wenn diese aus einem Material mit geringer Dichte bestehen, wie insbesondere Dämmstoffplatten aus Hartschaum, die zur Wärmedämmung in und an Gebäuden sowie zur Schalldämmung etc. eingesetzt werden. Denn die Bearbeitung und Verarbeitung von solchen Dämmstoffplatten erfordert in der Regel einen maschinellen Transport derselben auf einer Förderstrecke. Aufgrund der geringen Dichte und damit der im Verhältnis zu ihrem Volumen geringen Gewichtskraft solcher Werkstoffplatten ist es jedoch eher die Regel als die Ausnahme, dass die Werkstoffplatten beim aufliegenden Transport auf einem Förderband nicht schlupffrei transportiert werden können, sondern bei Beschleunigungen des Förderbands oder auch bei einer Bearbeitung der Werkstücke auf dem Förderband verrutschen. Auch eine aus Materialien mit hohem Reibwert bestehende Transportseite des Förderbandes kann dies insbesondere dann nicht verhindern, wenn aus Effizienzgründen relativ hohe Transportgeschwindigkeiten und damit einhergehend hohe Beschleunigungswerte auf der Förderstrecke erzielt werden sollen.

Eine Vorrichtung der eingangs genannten Art, mit der auch Werkstoffplatten mit geringer Dichte mittels Vakuumunterstützung schlupffrei aufliegend transportiert werden können, ist aus der DE 197 27 361 C5 bekannt geworden. Dort sind mehrere parallel verlaufende Förderbänder vorgesehen, die um einen gemeinsamen Saugkasten, der das eingangs genannte Gehäuse bildet, umlaufen. Die Obertrums der Förderbänder laufen in Nuten, die in die Oberfläche dieses Saugkastens eingebracht sind. Die Nuten sind so flach, dass die Obertrums der Förderbänder über die ansonsten eben ausgebildete Oberseite des Saugkastens überstehen. Werkstücke, die auf den Transportseiten der Obertrums der Förderbänder aufliegen, berühren demnach die Oberseite des Saugkastens nicht, sondern bewegen sich in einem geringen Abstand darüber hinweg.

Zwischen zwei Obertrums der Förderbänder nach diesem Stand der Technik befindet sich jeweils eine Anzahl von Ansaugöffnungen, die mit dem Inneren des Saugkastens in Verbindung stehen. Dieses Innere des Saugkastens wird durch leistungsfähige Gebläse evakuiert und bildet so zusammen mit den Ansaugöffnungen einen Teil der Vakuumeinrichtung. Wenn nun ein plattenförmiges Werkstück gleichzeitig auf zwei Obertrums der Förderbänder aufliegt, deckt es den Zwischenraum zwischen diesen beiden Förderbändern partiell ab, so dass die Ansaugöffnung, soweit diese und das Gebläse ausreichend dimensioniert sind, einen Unterdruck im abgedeckten Zwischenraum erzeugen kann. Dieser Unterdruck sorgt dafür, dass das Werkstück angesaugt und hierdurch gegen die Transportseite der beiden Obertrums gezogen wird, um es dort möglichst positionsgenau festzuhalten und schlupffrei transportieren zu können.

Allerdings ist der nach diesem Stand der Technik von einem Werkstück abgedeckte Zwischenraum zwischen den Förderbändern nicht gegen die Umgebung abgedichtet, denn in und gegen die Transportrichtung ist der Zwischenraum unterhalb des Werkstücks offen. Um eine ausreichende Ansaugwirkung zu erzielen, müssen daher hohe Volumenströme an Luft durch die Ansaugöffnung und den Saugkasten angesaugt werden, was entsprechend leistungsfähige und energieintensive Gebläse oder Pumpen erfordert. Hinzu kommt, dass im Betrieb der Vorrichtung in der Regel nicht alle Ansaugöffnungen entlang der Förderstrecke von einem Werkstück überdeckt sind, so dass hier entweder große Mengen an Falschluft angesaugt werden oder aber eine Steuerungstechnik notwendig ist, die die Ansaugöffnungen bedarfsweise inaktiv setzt bzw. verschließt. In der DE 197 27 361 C5 begegnet man diesem Problem durch Unterteilen des Saugkastens in eine Reihe von aufeinanderfolgenden Kammern, in denen der Unterdruck ein- und ausgeschaltet werden kann, und zwar gesteuert von Sensorsignalen, die das Vorhandensein eines zu transportierenden Werkstücks detektieren.

Ausgehend von diesem Stand der Technik liegt der vorliegenden Erfindung die Aufgabe zugrunde, eine Vorrichtung der eingangs genannten Art zu vereinfachen, und zwar hinsichtlich des konstruktiven Aufwands (Sensorik) und hinsichtlich der geforderten Leistungsfähigkeit der Vakuumeinrichtungen (Energieeffizienz).

Diese Aufgabe ist gelöst durch eine Vorrichtung mit den Merkmalen des Anspruchs 1. Bevorzugte Ausgestaltungen und Weiterbildungen der erfindungsgemäßen Vorrichtung finden sich in den Ansprüchen 2 bis 10; bevorzugte Verwendungen sind in den Ansprüchen 11 und 12 niedergelegt.

Die vorliegende Erfindung verlegt also die Ansaugöffnungen des Standes der Technik vom Zwischenraum zwischen zwei Obertrums zweier Förderbänder in das Förderband selbst: Das Förderband besitzt umfangsverteilt eine Reihe von entlang seiner Bewegungsrichtung angeordneten Durchgangsbohrungen, durch die aufliegende bzw. anliegende Werkstücke angesaugt und auf der Transportseite des Förderbandes festgehalten werden können.

Das Gehäuse weist erfindungsgemäß einen längs verlaufenden Ansaugschlitz auf, der mit der Vakuumeinrichtung in Verbindung steht und über den Luft abgesaugt werden kann. Dieser Ansaugschlitz verläuft solcherart entlang einer gesamten Förderstrecke, dass er mit den Durchgangsbohrungen des Förderbandes fluchtet. Das Gehäuse ist mit Dichtflächen versehen, die beidseits des Ansaugschlitzes angeordnet sind. Alternativ oder zusätzlich kann auch das Förderband mit Dichtflächen versehen sein, die beidseits der Reihe von Durchgangsbohrungen angeordnet sind und gegebenenfalls mit den Dichtflächen auf dem Gehäuse zusammenwirken. Dementsprechend bildet das Förderband mit Hilfe der Dichtflächen eine Abdeckung des Ansaugschlitzes, so dass dieser nur noch durch die Durchgangsbohrungen im Förderband Luft ansaugen kann. Bei an dem Gehäuse anliegendem Förderband sorgen die Dichtflächen dafür, dass ein zwischen den Dichtflächen eingeschlossener Zwischenraum zwischen dem Gehäuse und dem Förderband, der einerseits an den Ansaugschlitz und andererseits an die Durchgangsbohrungen grenzt, gegen Eintritt von Umgebungsluft abgedichtet ist. Dies führt im Ergebnis zur gewollten Saugwirkung auf Werkstücke, die auf dem Förderband aufliegen bzw. an diesem anliegen.

Erfindungsgemäß ist erkannt worden, dass die Haltekraft vor allem durch einen Druckunterschied zwischen der Umgebung und dem Inneren der Durchgangsbohrungen hervorgerufen wird, was an sich keine hohen Volumenströme an angesaugter Luft voraussetzt. Mit der vorliegenden Erfindung ist diese Erkenntnis umgesetzt worden, so dass ein vakuumunterstützter, positionsgenauer Transport mit kleineren Vakuumeinrichtungen oder aber mit höheren Haltekräften als bisher durchgeführt werden kann. Darüber hinaus ergeben sich weitere Vorteile dadurch, dass die Ansaugöffnungen nicht mehr, wie im Stand der Technik, stationär sind, während sich die Werkstücke darüber hinweg bewegen und daher keinen konstanten Ansaugkräften ausgesetzt sind, sondern sich jetzt mit den Werkstücken mitbewegen und mit einem über die gesamte Transportstrecke durchgehenden Ansaugschlitz verbunden sind, so dass die auf das Werkstück wirkende Haltekraft über die gesamte Förderstrecke konstant bleibt.

Durch das eng begrenzte Volumen, in dem Unterdruck herrscht, wird die Rückseite des Förderbandes außerhalb der Dichtflächen nicht vom Unterdruck oder wie im Stand der Technik von hohen Volumenströmen aus angesaugter (Falsch)-Luft beeinflusst. Das Förderband kann daher mit geringstmöglicher Reibungskraft am Gehäuse entlang gleiten. Auch dies trägt neben dem sehr geringen Aufwand für das Herstellen und das Aufrechterhalten des Vakuums vorteilhaft zur Engergieeffizienz der Vorrichtung bei.

Nach einer bevorzugten Ausgestaltung der vorliegenden Erfindung ist das Förderband an seiner Rückseite, die der Transportseite gegenüberliegt, mit einer umlaufenden Nut versehen, in welche die Durchgangsbohrungen münden. Eine solche Nut kann wie an sich bekannt zur Führung des Förderbandes auf dem Gehäuse verwendet werden. Hierzu kann das Gehäuse beispielsweise einen Auflageabschnitt aufweisen, der in die Nut eingreift. Im Rahmen der vorliegenden Erfindung bietet eine solche Nut jedoch weitere Vorteile:

Wenn ein Auflageabschnitt des Gehäuses, der in die Nut eingreift, beidseits des Ansaugschlitzes mit jeweils mindestens einer oberen Dichtfläche versehen ist, die entlang eines Nutbodens der Nut gleitet, wird der zu evakuierende, von den Dichtflächen eingeschlossene Zwischenraum zwischen dem Gehäuse und dem Förderband noch kleiner. Bevorzugt weist der Auflageabschnitt des Gehäuses beidseits des Ansaugschlitzes und der oberen Dichtflächen außerdem jeweils mindestens eine weitere, seitliche Dichtfläche auf, die entlang der Seitenwände der Nut gleitet. Die oberen und seitlichen Dichtflächen bilden in Kombination dann eine Labyrinthdichtung, welche den Eintritt von Falschluft in den evakuierten Zwischenraum effizient verhindert. Eine solche Labyrinthdichtung erzeugt die Dichtungswirkung vor allem aufgrund strömungstechnischer Effekte, da sich zwei Flächen mit höchstens einem geringen zwischenliegenden Spalt gegeneinander bewegen und dieser Spalt außerdem nicht geradlinig verläuft, sondern abgewinkelt ist. Durch die Bewegung der beiden gegeneinander bewegten Flächen erhöht sich der Strömungswiderstand innerhalb des verbleibenden Spalts derart, dass sich praktisch eine vollständige Abdichtung ergibt.

Die erfindungsgemäß geringen Volumenströme und das vorteilhafte Gleiten des Förderbands mit geringstmöglicher Reibungskraft am Gehäuse bedingt, dass der Dichtungswirkung der bevorzugt vorhandenen Labyrinthdichtung besondere Bedeutung zukommt. Selbst wenn die Dichtflächen einerseits des Förderbandes und andererseits des Gehäuses nicht oder nicht ständig in gleitendem Kontakt sind, sondern gegebenenfalls einen geringen Spalt zwischen sich bilden, verhindert der Labyrinthdichtungseffekt, dass durch diesen Spalt Falschluft gezogen wird.

Soweit die Dichtflächen, insbesondere wenn sie eine Labyrinthdichtung bilden, im wesentlichen aus einem Industriekunststoff, insbesondere einem hochmolekularen Niederdruckpolyethylen bestehen, wie es beispielsweise für Kettenführungen verwendet wird, ist diese bewegte Labyrinthdichtung bzw. die Dichtfläche einerseits des Förderbands und andererseits des Gehäuses nicht nur besonders verschleißfest, sondern auch mit besonders guten gleitenden Eigenschaften versehen. Dies ist wiederum unter dem Gesichtspunkt der Energieeffizienz besonders vorteilhaft, denn es gewährleistet einen geringen Widerstand beim Antrieb des Förderbandes, während, wie erwähnt, der Energieaufwand für das Herstellen und das Aufrechterhalten des Vakuums aufgrund der sehr niedrigen Volumenströme sehr viel geringer ist, als im bisherigen Stand der Technik.

Wenn sich die beiderseitigen oberen Dichtflächen über die gesamte Länge des Ansaugschlitzes erstrecken und an dessen stirnseitigen Enden mit jeweils einem die beidseitigen Dichtflächen verbindenden Dichtungselement versehen sind, welches vorzugsweise aus dem gleichen Material wie die Dichtflächen gefertigt ist, ergibt sich zwischen dem Förderband und dem Ansaugschlitz ein durch die Dichtflächen und die Dichtungselemente geschlossenes, über den Ansaugschlitz zu evakuierendes Volumen, in welches nur über die erfindungsgemäßen Durchgangsbohrungen des Förderbandes Luft angesaugt werden kann. Wenn auf den Durchgangsbohrungen Werkstücke aufliegen, ist auch dies nicht mehr möglich, so dass die Werkstücke rein aufgrund der Druckdifferenz zwischen dem genannten Volumen und dem Umgebungsdruck gegen die Transportseite des Förderbandes gedrückt werden und praktisch kein Luftvolumen mehr abgesaugt werden muss.

Soweit das Gehäuse einen relativ großen Saugkasten bildet, dessen Volumen über den Ansaugschlitz mit der Nut des Förderbandes verbunden ist, steht den relativ kleinen Durchgangsbohrungen ein relativ großes Unterdruckvolumen gegenüber, so dass Falschluft, die durch nicht mit Werkstücken abgedeckte Durchgangsbohrungen angesaugt wird, kaum ins Gewicht fällt.

Das Förderband selbst kann, wie an sich bekannt, mit einer gezahnten Rückseite versehen sein, um mit einer gezahnten Antriebsrolle zusammenzuwirken, so dass der durch die vorliegende Erfindung erzielbare Vorteil eines positionsgenauen und verrutschsicheren Transports von Werkstücken, der ein exaktes Positionieren derselben auf der Förderstrecke ermöglicht, nicht durch Ungenauigkeiten in der Positionierung des Förderbandes selbst entwertet wird. Im Bereich der bevorzugt vorhandenen Nut wird die Zahnung der Förderband-Rückseite naturgemäß unterbrochen.

Um die Haltekräfte zwischen den angesaugten Werkstücken und der Transportseite des Förderbandes nochmals signifikant und vorteilhaft zu erhöhen, kann das Förderband auf seiner Transportseite mit Saugtaschen versehen sein, in welche die Durchgangsbohrungen münden. Diese Saugtaschen sind, um das abzusaugende Luftvolumen klein zu halten, vorzugsweise flach ausgebildet, während sie eine möglichst große Fläche aus der Transportseite des Förderbandes ausnehmen, um die zur Fläche proportionalen Andruckkräfte möglichst hoch zu halten. Dies kann so weit gehen, dass die Saugtaschen einen Großteil der Fläche der Transportseite des Förderbandes einnehmen, während randseitig und zwischen den Saugtaschen nur noch Auflagestege für die Werkstücke zurückbleiben.

Um eine zuverlässige Führung des Förderbandes auf dem Gehäuse sicherzustellen, was wiederum die exakte Absolut-Positionierung von transportierten Werkstücken verbessert, kann das Gehäuse als ein im wesentlichen quaderförmiger Saugkasten mit einer oberen Wand, einer unteren Wand und zwei Seitenwänden ausgestaltet sein, wobei die Breite der oberen Wand der Breite des Förderbandes entspricht, und wobei insbesondere die Seitenwände oben über die obere Wand überstehen, so das sie seitliche Führungen für das Förderband bilden. Nach dieser bevorzugten Ausgestaltung wird das Förderband dann nicht mehr gegebenenfalls in seiner Nut am Gehäuse geführt, sondern im wesentlichen an den überstehenden Seitenwänden.

Diese bevorzugte Ausgestaltung des Gehäuses mit überstehenden Seitenwänden, die seitliche Führungen für das Förderband bilden, bietet besondere Vorteile im Zusammenhang mit dem Vorsehen einer Labyrinthdichtung, die durch obere und seitliche Dichtflächen zwischen einerseits dem Gehäuse und andererseits dem Förderband gebildet wird. Denn die seitlichen Führungen für das Förderband ermöglichen, dass die Nut im Förderband von seitlichen Führungskräften entlastet wird und somit insbesondere keine Passung der seitlichen Dichtflächen gegeben sein muss, um das Förderband seitlich zu führen. Die seitlichen Dichtflächen einerseits des Gehäuses und andererseits des Förderbandes können vielmehr mit einem deutlichen Spiel aufeinanderlaufen, so dass die Reibung stark herabgesetzt ist. Aufgrund des Labyrinthdichtungs-Effekts ist gleichwohl die gewünschte Dichtungswirkung gegeben. Dies trägt insgesamt zur Energieeffizienz der Vorrichtung bei.

Die erfindungsgemäße Vorrichtung wird bevorzugt zum positionsgenauen Transport von Werkstoffplatten mit geringer Dichte, insbesondere Dämmstoffplatten und dergleichen verwendet. Es sind jedoch auch andere Verwendungen denkbar, vorteilhaft und im Rahmen der vorliegenden Erfindung liegend, insbesondere eine Verwendung in einer Digital-Druckmaschine zum Bedrucken der Werkstücke in einem Portaldrucker, beispielsweise einem Tintenstrahldrucker. Denn auch hier kommt es auf eine exakte Positionierung des Werkstücks relativ zum Drucker an, wozu vor allem das schlupffreie, verrutschsichere und exakt geführte Transportieren des Werkstücks auf der durch den Portaldrucker führenden Förderstrecke zählt.

Ein Ausführungsbeispiel für die erfindungsgemäße Vorrichtung wird im folgenden anhand der beigefügten Zeichnungen näher beschrieben und erläutert. Es zeigen:
- Figur 1: eine schematische perspektivische Darstellung eines Ausführungsbeispiels für eine erfindungsgemäße Vorrichtung;
- Figur 2: einen Querschnitt durch die Vorrichtung aus Figur 1;
- Figur 3: den oberen Teil des Querschnitts aus Figur 2 in Vergrößerung.

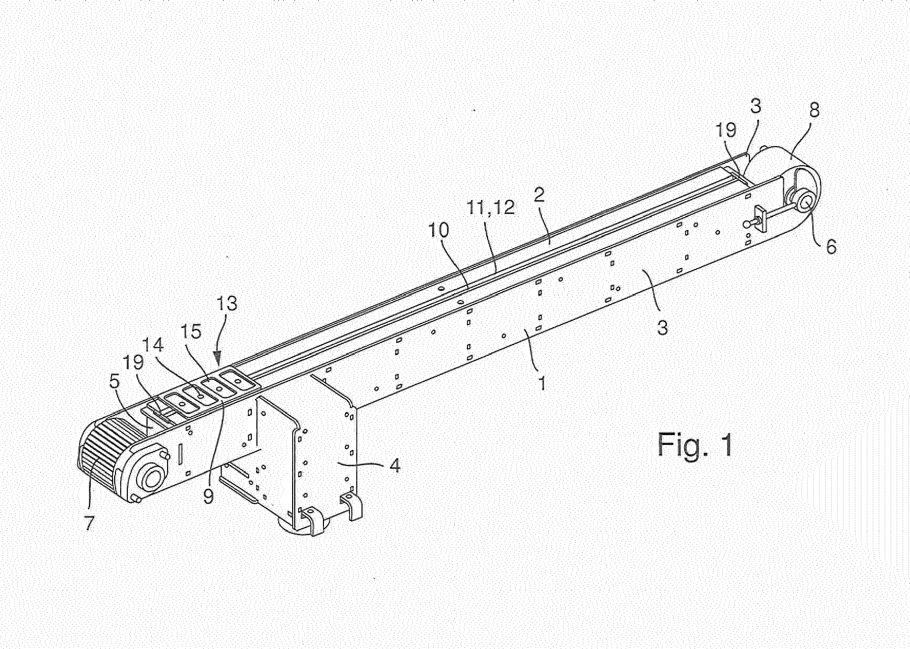

Die in Figur 1 perspektivisch und schematisch dargestellte Vorrichtung umfasst zunächst ein Gehäuse 1 mit einer oberen Wand 2, einer (nicht sichtbaren) unteren Wand sowie zwei Seitenwänden 3, wobei das Gehäuse 1 an einem Träger 4 befestigt ist.

Das Gehäuse 1 ist aus mittels eines Laser-Schneidegeräts vorbereiteten Blechen in Steck- und Biegetechnik hergestellt worden: Die Bleche wurden zusammengesteckt und mittels Biegen von Stecklaschen aneinander fixiert.

Das Gehäuse 1 bildet im wesentlichen einen Saugkasten 5 als Teil der Vakuumeinrichtung, wobei der Saugkasten 5 durch den Träger 4 von einem Gebläse oder einer Pumpe evakuiert wird. Stirnseitig besitzt das Gehäuse 1 Flanschlager für eine Antriebsrolle 7 und Halterungen 6 für eine Umlenkrolle 8 für ein um das Gehäuse 1 umlaufendes Förderband 9, von dem hier der besseren Anschaulichkeit wegen lediglich ein kurzes Stück des Obertrums dargestellt ist. Die Antriebsrolle 7 ist wie auch die Rückseite des Förderbandes 9 gezahnt, um eine exakte Längspositionierung des Förderbandes auf dem Gehäuse 1 sicherstellen zu können.

Die Seitenwände 3 des Gehäuses 1 stehen oben geringfügig über die obere Wand 2 des Gehäuses über, während die obere Wand 2 eine Breite besitzt, die der Breite des Förderbandes 9 entspricht, so dass die genannten Überstände der Seitenwände 3 eine seitliche Führung des zwischen den Seitenwänden 3 eingebetteten Förderbandes 9 sicherstellen. Diese seitliche Führung erfolgt im vorliegenden Ausführungsbeispiel durch eine Spielpassung mit maximal 0,5 mm, vorzugsweise maximal 0,2 mm Spiel zwischen dem Förderband 9 und den Seitenwänden 3.

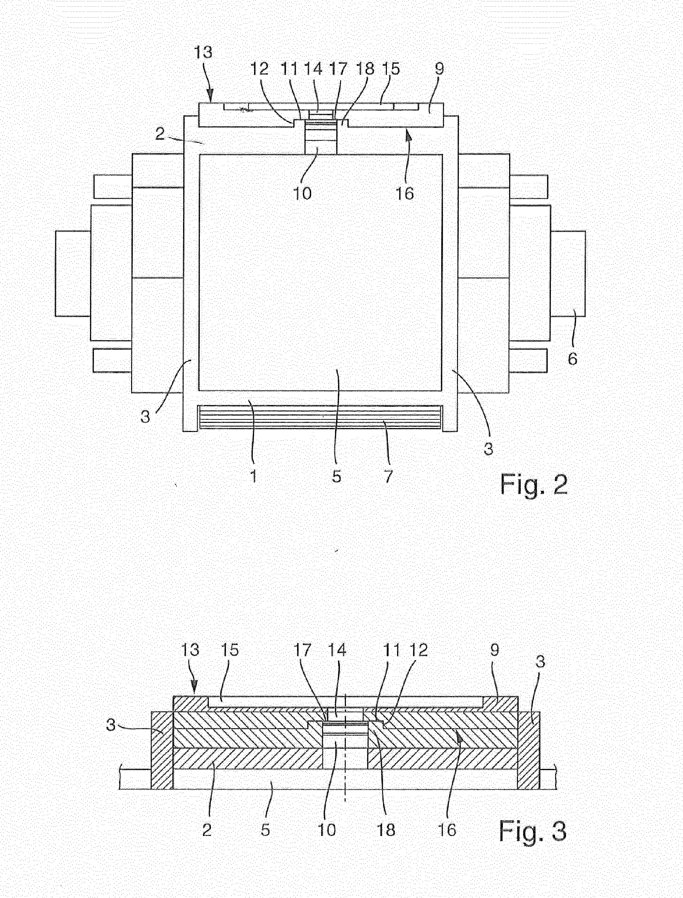

Längs der oberen Wand 2 ist etwa mittig ein Ansaugschlitz 10 in die obere Wand 2 eingebracht, der hier aus einer Reihe von Langlöchern mit zwischenliegenden Stabilisierungsstegen besteht, sich entlang des gesamten Saugkastens 5 erstreckt und diesen nach oben öffnet. Seitlich neben dem Ansaugschlitz 10 sind Dichtflächen 11, 12 angeordnet, die unten anhand der Figuren 2 und 3 näher beschrieben werden und in den genannten Figuren besser erkennbar sind. In Zusammenwirken mit den Dichtflächen 11, 12 bildet der Ansaugschlitz 10, der hier durch Stabilisierungsstege unterbrochen ist, einen für die aufliegenden Werkstücke nahtlos durchgehenden Saugkanal, bzw. Schlitz, der sich entlang der gesamten Förderstrecke erstreckt.

In Figur 1 ist gut zu erkennen, dass das Förderband 9 an seiner Transportseite 13 eine Reihe von Ausnehmungen 15 aufweist, die über jeweils eine Durchgangsbohrung 14 durch das Förderband hindurch mit dem Ansaugschlitz 10 und damit mit dem Saugkasten 5 in Verbindung stehen, wodurch die Ausnehmungen zu Saugtaschen 15 werden.

Anhand der Figuren 2 und 3 ist erkennen, dass das Gehäuse 1 einen Saugkasten 5 mit verhältnismäßig großem Volumen bildet, gegenüber dem die Saugtaschen 15 des Förderbandes 9 ein nur sehr geringes Volumen aufweisen. Dieses Volumen der Saugtaschen 15 wird über die Durchgangsbohrungen 14 im Förderband 9 und über den Ansaugschlitz 10 im Gehäuse 1 abgesaugt, wodurch ein (nicht dargestelltes) auf dem Förderband 9 aufliegendes Werkstück gegen die Transportseite 13 des Förderbands 9 gedrückt wird.

Die Durchgangsbohrung 14 mündet an der Rückseite des Förderbandes 9 in eine in die Rückseite 16 eingearbeitete Nut 17. Als Gegenstück zur Nut 17 weist die obere Wand 2 des Gehäuses 1 einen über die obere Wand 2 erhabenen Auflageabschnitt 18 auf, der in die Nut 17 eingreift und den Ansaugschlitz 10 enthält. Neben dem Ansaugschlitz 10 ist der Auflageabschnitt 18 des Gehäuses 1 mit oberen Dichtflächen 11 und seitlichen Dichtflächen 12 versehen, was sich anhand Figur 3 besser erkennen läst. Diese Dichtflächen bestehen aus einem ultrahochmolekularen Niederdruckpolyethylen, wie es von der Firma Murtfeldt Kunststoffe GmbH & Co. KG, Dortmund, unter der markenrechtlich geschützten Handelsbezeichnung "Werkstoff S grün" vertrieben wird. Dieses ist nicht nur verschleißfest und gleitfähig, sondern bietet aufgrund seiner geschlossenen Oberfläche und einer Shore-Härte D von 66 außerdem gute abdichtende Eigenschaften gegen den Durchtritt von Luft an der Kontaktfläche zwischen der Dichtfläche 11 und der Nut 17 des Förderbandes 9. Alternativ können die Dichtflächen 11, 12 aus jedem anderen verschleißfesten und gleitfähigen Material bestehen, beispielsweise aus Festholz-Gleitholz.

Aufgrund der Spielpassung des Förderbandes 9 in den nach oben überstehenden Seitenwänden 3 des Gehäuses 1 ist es möglich, auch zwischen der Nut 17 des Förderbandes 9 und den seitlichen Dichtflächen 12 des Auflageabschnitts 18 eine Spielpassung vorzusehen, so dass an dieser Stelle nicht zwangsläufig ein Kontakt zwischen den sich zueinander bewegenden Teilen 9 bzw. 17 und 12 resultiert, sondern diese mit einem Spiel, im vorliegenden Ausführungsbeispiel ca. 0,2 mm, versehen sind und somit größtenteils nicht aufeinander schleifen. Die seitlichen Dichtflächen 12 bilden im Zusammenwirken mit den oberen Dichtflächen 11 eine Labyrinthdichtung, so dass das geringe Spiel keine nennenswerten Undichtigkeiten erzeugt, sondern der Strömungswiderstand innerhalb der Labyrinthdichtung für eine ausreichende Dichtungswirkung sorgt. Aufgrund der Spielpassung an den Seitenwänden 3 des Gehäuses 1 ist es nicht die Ausnahme, sondern der gewollte Normalzustand, dass die Nut 17 des Förderbandes 9 nicht entlang der seitlichen Dichtflächen 12 gleitet, sondern sich mit einem geringen Spiel (typischer Abstand: ca. 0,2 mm) an den seitlichen Dichtflächen 12 entlangbewegt, so dass bei gegebener Dichtungswirkung durch den Labyrinthdichtung-Effekt gleichwohl eine äußerst geringe Reibung an dieser Stelle zu verzeichnen ist, was hinsichtlich der Energieeffizienz und der Verschleißfestigkeit der Vorrichtung sehr vorteilhaft ist.

Ein auf den Saugtaschen 15 aufliegendes und diese nach oben abdeckendes Werkstück wird dann aufgrund des Druckunterschieds zwischen der Saugtasche 15 und dem Umgebungsdruck mit hoher Kraft gehalten, während die Rückseite 16 des Förderbandes 9 zwischen der Nut 17 und den nach oben überstehenden Seitenwänden 3 des Gehäuses 1 vom Vakuum unbeeinflusst bleibt. Selbst wenn die Labyrinthdichtung aufgrund der Förderbandbewegung Undichtigkeiten aufweisen sollte, bleibt die Rückseite 16 des Förderbandes 9 unbeeinflusst, da die Falschluft durch die Zahnung ungehindert von außen nachströmen kann. Wegen der erfindungsgemäß nur geringen fließenden Vakuumströme ergeben sich hierdurch keine höheren Andruckkräfte auf das Förderband. Neben der hohen Energieeffizienz der Vakuumeinrichtung durch geringe Vakuumströme ist also auch die Förderbandbewegung mit geringem Energieaufwand möglich, da nur kleine Reibungskräfte wirken.

Wie wiederum anhand Figur 1 gut zu erkennen ist, wird der Ansaugschlitz 10 des Gehäuses 1 seitlich durchgehend von den Dichtflächen 11 und 12 flankiert, die bei aufliegendem Förderband 9 den Zutritt von seitlicher Falschluft in den Ansaugschlitz 10 verhindern. Stirnseitig sind zwei Dichtungselemente 19 als Abschluss des Ansaugschlitzes 10 angebracht, die sich im Querschnitt über alle vier Dichflächen 11, 12 erstrecken und den Zutritt von stirnseitiger Falschluft in den Ansaugschlitz 10 verhindern. Die Dichtungselemente 19 können aus demselben Material bestehen wie die Dichtflächen 11, 12, oder aber, wie im vorliegenden Ausführungsbeispiel, durch Spanten aus Blech gebildet sein.

## Patentansprüche

1. Vorrichtung zum positionsgenauen Transport von flächigen Werkstücken, insbesondere von Werkstoffplatten mit geringer Dichte, wie Dämmstoffplatten und dergleichen,
mit mindestens einem um ein Gehäuse (1) umlaufenden Förderband (9), sowie mit einer zumindest teilweise im Gehäuse (1) angeordneten oder durch das Gehäuse wirkenden Vakuumeinrichtung (5), die die Werkstücke ansaugt und hierdurch gegen eine vom Gehäuse (1) abgewandte Transportseite (13) des Förderbands (9) drückt, um sie dort positionsgenau festzuhalten,
**dadurch gekennzeichnet,**
**dass** das Förderband (9) eine Anzahl von Durchgangsbohrungen (14) aufweist, die entlang seiner Bewegungsrichtung im wesentlichen in einer Reihe angeordnet sind und das Förderband (9) durchgreifen,
**dass** das Gehäuse (1) einen längs verlaufenden, mit den Durchgangsbohrungen (14) des Förderbandes (9) fluchtenden Ansaugschlitz (10) aufweist, und dass das Gehäuse (1) und/oder das Förderband (9) mit beidseits des Ansaugschlitzes (10) und/oder beidseits der Reihe von Durchgangsbohrungen (14) angeordneten Dichtflächen (11) versehen sind, um bei auf dem Gehäuse (1) aufliegendem Förderband (9) einen einerseits an den Ansaugschlitz (10) und andererseits an die Durchgangsbohrungen (14) grenzenden Zwischenraum zwischen dem Gehäuse (1) und dem Förderband (9) abzudichten,
wobei die Durchgangsbohrungen (14) des Förderbandes (9) von der Vakuumeinrichtung (5) über den Ansaugschlitz (10) mit Unterdruck beaufschlagbar sind, um die Werkstücke mit Unterdruck gegen die Transportseite (13) des Förderbandes (9) zu drücken.

2. Vorrichtung nach Anspruch 1,
**dadurch gekennzeichnet,**
**dass** eine der Transportseite (13) gegenüberliegende Rückseite (16) des Förderbandes (9) mit einer umlaufenden Nut (17) versehen ist, in welche die Durchgangsbohrungen (14) münden.

3. Vorrichtung nach Anspruch 2,
**dadurch gekennzeichnet,**
**dass** das Gehäuse (1) einen in die Nut (17) eingreifenden und den Ansaugschlitz (10) enthaltenden Auflageabschnitt (18) aufweist, der beidseits des Ansaugschlitzes (10) jeweils mindestens eine obere Dichtfläche (11) aufweist, die zum Gleiten entlang eines Nutbodens der Nut (17) vorgesehen ist.

4. Vorrichtung nach Anspruch 3,
**dadurch gekennzeichnet,**
**dass** der Auflageabschnitt (18) des Gehäuses (1) beidseits des Ansaugschlitzes (10) und der oberen Dichtflächen (11) jeweils mindestens eine weitere, seitliche Dichtfläche (12) aufweist, die zum Gleiten entlang der Seitenwände der Nut (17) vorgesehen ist und zusammen mit der jeweiligen oberen Dichtfläche (11) eine Labyrinthdichtung bildet.

5. Vorrichtung nach mindestens einem der Ansprüche 1 bis 4,
**dadurch gekennzeichnet,**
**dass** die Dichtflächen (11, 12) im wesentlichen aus einem Industriekunststoff, insbesondere einem hochmolekularen Niederdruckpolyethylen gefertigt sind.

6. Vorrichtung nach mindestens einem der Ansprüche 1 bis 5,
**dadurch gekennzeichnet,**
**dass** die beiderseitigen oberen Dichtflächen (11) den Ansaugschlitz (10) zwischen sich einschließen, indem sie sich entlang von dessen gesamter Länge erstrecken, und dass an den stirnseitigen Enden des Ansaugschlitzes (10) jeweils ein die beidseitigen Dichtflächen (11) verbindendes Dichtungselement (19) angebracht ist.

7. Vorrichtung nach Anspruch 6,
**dadurch gekennzeichnet,**
**dass** die Dichtungselemente (19) aus dem gleichen Material wie die Dichtflächen (11) gefertigt sind.

8. Vorrichtung nach mindestens einem der Ansprüche 1 bis 7,
**dadurch gekennzeichnet,**
**dass** das Förderband (9) mit einer gezahnten Rückseite (16) versehen ist.

9. Vorrichtung nach mindestens einem der Ansprüche 1 bis 8,
**dadurch gekennzeichnet,**
**dass** das Förderband (9) auf seiner Transportseite (13) mit Saugtaschen (15) versehen ist, in die die Durchgangsbohrungen (14) münden.

10. Vorrichtung nach mindestens einem der Ansprüche 1 bis 9,
**dadurch gekennzeichnet,**
**dass** das Gehäuse (1) ein im wesentlichen quaderförmiger Saugkasten (5) mit einer oberen Wand (2), einer unteren Wand und zwei Seitenwänden (3) ist, wobei die Breite der oberen Wand (2) der Breite des Förderbandes (9) entspricht, und wobei die Seitenwände (3) oben über die obere Wand (2) überstehen, so dass sie seitliche Führungen für das Förderband (9) bilden.

11. Verwendung einer Vorrichtung nach mindestens einem der Ansprüche 1 bis 10 zum positionsgenauen aufliegenden und/oder hängenden Transport von Werkstoffplatten mit geringer Dichte, insbesondere Dämmstoffplatten und dergleichen.

12. Verwendung einer Vorrichtung nach mindestens einem der Ansprüche 1 bis 10 zum Transport von Werkstücken in einer Digitaldruckmaschine zum Bedrucken der Werkstücke in einem Portaldrucker
